# EUROPÄISCHE PATENTSCHRIFT

(11) **EP 1 916 160 B1**
(45) Veröffentlichungstag und Bekanntmachung des Hinweises auf die Patenterteilung: **03.03.2010**
(21) Anmeldenummer: 06022500.0
(22) Anmeldetag: 27.10.2006
(51) Int. Cl.: B60R 21/231, B60R 21/235, B60R 21/217

(54) **Verbindung zwischen Airbag und Gasgenerator**
Connection between airbag and inflation unit
Module de coussin de sécurité gonflable avec raccord à verrouillage

(43) Veröffentlichungstag der Anmeldung: 30.04.2008
(73) Patentinhaber: Delphi Technologies, Inc., Troy, Michigan 48007 (US)
(72) Erfinder: Guthke, Detlev, 58089 Hagen (DE); Maiwald, Helmut, 51515 Kürten (DE)
(74) Vertreter: Denton, Michael John

(56) Entgegenhaltungen:
- EP-A- 1 273 486
- DE-A1- 19 944 052
- DE-B4- 19 782 127
- DE-U1- 20 105 734
- JP-A- 2002 302 008
- US-A1- 6 073 961

## Beschreibung

Die vorliegende Erfindung betrifft ein Luftsackmodul für ein Kraftfahrzeug mit einem Luftsack und einem stabförmigem Gasgenerator zum Aufblasen des Luftsacks, gemäß dem Oberbegriff des Anspruchs 1. Ein solches Luftsackmodul ist beispielsweise aus DE 201 05 734 U1 bekannt.

Es ist bekannt, den Gasgenerator eines Luftsacks vollständig innerhalb des Luftsacks unterzubringen oder ihn teilweise in den Luftsack hineinragen zu lassen. Beispielsweise ist es aus der EP 508 486 A1 bekannt, einen stabförmigen Gasgenerator tangential außerhalb des Luftsacks anzuordnen, wozu der Luftsack im Bereich des Luftsackmundes ein Spannband aufweist, welches den Gasgenerator unter Spannung greift. Zur Fixierung des Gasgenerators an dem Luftsack wird das Spannband im Bereich des Luftsackmundes mit dem Luftsack vernäht, so dass durch die radial angeordneten Gasdurchtrittsöffnungen des Gasgenerators das Gas über den Luftsackmund in den Luftsack einströmen kann.

Es ist eine Aufgabe der vorliegenden Erfindung, ein Luftsackmodul der eingangs genannten Art zu schaffen, das eine besonders einfache und robuste Anbindung des Gasgenerators an den Luftsack ermöglicht.

Die Lösung der der vorliegenden Erfindung zugrunde liegenden Aufgabe erfolgt durch ein Luftsackmodul mit den Merkmalen des Anspruchs 1.

Da bei einem erfindungsgemäßen Luftsackmodul in aller Regel schubneutrale Gasgeneratoren mit symmetrisch angeordneten Gasaustrittsöffnungen zum Einsatz kommen, kann eine besonders effektive Gasumlenkung dadurch erzielt werden, dass der Aufnahmeabschnitt in seiner Gestalt im Wesentlichen komplementär auf die Gestalt des von ihm aufgenommenen Abschnitts des Gasgenerators abgestimmt ist. Auf diese Weise kann Gas, welches aus von der Expansionskammer abgewandten Gasaustrittsöffnungen austritt, zwischen dem Hüllmaterial des Aufnahmeabschnitts und dem Gasgenerator hindurch in Richtung der Expansionskammer geleitet werden.

Das erfindungsgemäße Luftsackmodul bietet durch den Aufnahmestutzen die Möglichkeit, den Luftsack beispielsweise mittels eines Kraftschlussmittels an dem Gasgenerator zu fixieren. Hierzu wird der Aufnahmestutzen auf den Gasgenerator gestülpt, so dass seine Gasaustrittsöffnungen im Inneren des Luftsacks zu liegen kommen, um dann mit einem geeigneten Befestigungsmittel auf dem Gasgenerator fixiert zu werden.

Um zu gewährleisten, dass bei einer Zündung des Luftsackmoduls das Gas von dem Gasgenerator ungehindert in die Expansionskammer strömen kann, weist der Luftsack einen von der Expansionskammer definiert abgesetzten Aufnahmeabschnitt auf, mit welchem der Aufnahmestutzen an die von der Luftsackhülle definierte Expansionskammer angebunden ist. Der Aufnahmestutzen geht somit nicht abrupt und unmittelbar in die Expansionskammer des Luftsacks über; vielmehr ist zwischen den Aufnahmestutzen und die von der Luftsackhülle definierte Expansionskammer der Aufnahmeabschnitt gewissermaßen als Adapter zwischengeschaltet, welcher einseitig in Richtung der Expansionskammer geöffnet ist und somit eine Verbindung zwischen dem eigentlichen Luftsack und dem Aufnahmestutzen darstellt. Sofern die Gasaustrittsöffnungen des Gasgenerators im Bereich der einseitigen Öffnung des Aufnahmeabschnitts zu liegen kommen, kann somit eine ungehinderte Beströmung der Expansionskammer im Falle einer Aktivierung des Gasgenerators gewährleistet werden.

Dadurch, dass der Gasgenerator und insbesondere dessen Gasaustrittsöffnungen im Bereich des Aufnahmeabschnitts zu liegen kommen, werden keine gesonderten Vorkehrungen zur Gasumlenkung in Richtung der Expansionskammer erforderlich, was darauf zurückzuführen ist, dass der Gasstrom ausgehend von den Gasaustrittsöffnungen bedingt durch die Gestalt des Aufnahmeabschnitts in Richtung der Expansionskammer geleitet werden kann. Insofern dient der Aufnahmeabschnitt unter anderem zur Gasumlenkung.

Vorteilhafte Ausführungsformen der Erfindung ergeben sich aus der Beschreibung, den Zeichnungen sowie den Unteransprüchen.

So kann das Luftsackmodul beispielsweise als Kraftschlussmittel ein Spannmittel wie beispielsweise eine Rohrschelle umfassen, welche den Aufnahmestutzen umfangsseitig umgibt, um ihn auf dem Gasgenerator aufzuklemmen. Die Befestigung des Luftsacks über den Aufnahmestutzen und ein Spannmittel wie beispielsweise eine Rohrschelle kann sich durch die damit einhergehende einfache Montage als vorteilhaft erweisen. Darüber hinaus ist die Befestigung des Luftsacks über den Aufnahmestutzen und ein Spannmittel besonders robust und darüber hinaus verhältnismäßig preiswert zu realisieren.

Da der Gasgenerator teilweise in den Luftsack bzw. den Aufnahmestutzen hineinragt, steht nur ein Teil des Gasgenerators für eine Befestigung am Fahrzeug zur Verfügung. Dementsprechend kann das erfindungsgemäße Luftsackmodul ferner ein separates Befestigungselement aufweisen, welches mit dem Spannmittel außenseitig auf dem schlauchförmigen Aufnahmestutzen aufgeklemmt ist. Das Spannmittel übernimmt somit zum einen die Funktion der Befestigung des Luftsacks an dem Gasgenerator und zum anderen die Befestigungsfunktion für den Gasgenerator, so dass keine weiteren Montageelemente für das Befestigungselement vorgesehen werden müssen. Alternativ kann das Luftsackmodul auch direkt über das Spannmittel am Fahrzeug befestigt werden, so dass das Spannmittel zum einen die Funktion der Befestigung des Luftsacks an dem Gasgenerator und zum anderen eine Befestigungsfunktion für das Luftsackmoduls am Fahrzeug übernimmt.

Gemäß einer weiteren Ausführungsform des erfindungsgemäßen Luftsackmoduls kann die die Expansionskammer bildende Luftsackhülle eine Naht aufweisen, entlang derer mehrere Randabschnitte der Luftsackhülle aneinander grenzen und miteinander verbunden sind, wobei diese Naht eine Unterbrechung aufweist, über welche der Aufnahmeabschnitt in die Expansionskammer mit der bereits vorgenannten einseitigen Öffnung einmündet. Die Grenze zwischen dem Aufnahmeabschnitt und der Expansionskammer wird somit durch die Unterbrechung in der genannten Naht definiert. Auf diese Weise lässt sich beispielsweise der Aufnahmeabschnitt einschließlich des Aufnahmestutzens einstückig mit der die Expansionskammer bildenden Luftsackhülle aus einem einzigen schlauchförmigen Hüllmaterial fertigen, welches entsprechende Abnäher aufweist, um den Aufnahmeabschnitt gegenüber der Expansionskammer definiert abzugrenzen.

Damit diese Gasumlenkung nicht durch etwaige Verformungen des Aufnahmeabschnitts beeinträchtigt wird, ist der Aufnahmeabschnitt gemäß einer weiteren Ausführungsform in seiner Gestalt derart auf die Gestalt des von ihm aufgenommenen Abschnitts des Gasgenerators abgestimmt, dass sein Volumen beim Aufblasen des Luftsacks im Wesentlichen konstant bleibt.

Da der Aufnahmeabschnitt und insbesondere der Übergangsbereich zwischen dem Aufnahmeabschnitt und der die Expansionskammer bildenden Luftsackhülle bei einer Aktivierung des Luftsackmoduls infolge der Gasumlenkung besonders hoch beansprucht wird, kann der Aufnahmeabschnitt als separates Teil aus einem Hüllmaterial gefertigt werden. Dabei kann der Aufnahmeabschnitt aus einem anderen Hüllmaterial gefertigt sein als die die Expansionskammer bildende Luftsackhülle, so dass durch entsprechende Materialwahl den besonders hohen Widerstandsanforderungen genüge getan werden kann.

Sofern der Aufnahmeabschnitt als separates Teil gefertigt ist, kann dieser mitsamt dem schlauchförmigen Aufnahmestutzen an die die Expansionskammer bildende Luftsackhülle angenäht sein. Zwar könnte der Aufnahmeabschnitt auch anderweitig mit der Expansionskammer, beispielsweise durch Verkleben, Verschweißen oder Vulkanisieren verbunden werden, jedoch lassen sich besonders hohe Festigkeiten erzielen, indem der Aufnahmeabschnitt an der die Expansionskammer bildenden Luftsackhülle angenäht wird, was gerade aufgrund der Beanspruchung infolge der Gasumlenkung im Bereich des Aufnahmeabschnitts wünschenswert ist.

Das erfindungsgemäße Luftsackmodul lässt sich besonders einfach und kostengünstig fertigen, wenn sämtliche Nähte wie beispielsweise die zuvor genannten Abnäher der Expansionskammer sowie die Nähte zur Anbindung des Aufnahmeabschnitts an die die Expansionskammer bildende Luftsackhülle mittels eines zweidimensionalen Nähverfahrens hergestellt werden. Bei einem derartigen zweidimensionalen Nähverfahren befinden sich sämtliche Nähte in einer Ebene, was durch entsprechende Schnittgeometrien der einzelnen miteinander zu vernähenden Teile sichergestellt werden kann.

Um nicht Gefahr zu laufen, dass durch die hohen Ausströmgeschwindigkeiten des Gases aus den Austrittsöffnungen des Gasgenerators die Nähte im Bereich des Aufnahmeabschnitts beschädigt werden, kann dieser mit zusätzlichen Materiallagen ausgekleidet sein. Eine derartige zusätzliche Materiallage schützt die Nähte im Bereich des Aufnahmeabschnitts nicht nur vor einer Beschädigung durch die mit hoher Geschwindigkeit austretenden Gase, sondern verhindert auch eine Beschädigung der Nähte durch einen reibenden Kontakt mit dem Gasgenerator.

Im Folgenden wird die vorliegende Erfindung rein beispielhaft anhand dreier exemplarischer Ausführungsbeispiele unter Bezugnahme auf die beigefügten Figuren beschrieben. In sämtlichen Figuren sind gleiche oder einander entsprechende Elemente mit gleichen Bezugszeichen gekennzeichnet, wobei:
- Fig. 1: eine perspektivische Darstellung einer ersten Ausführungsform eines Luftsackmoduls zeigt;
- Fig. 2: einen Querschnitt durch die Schnittebene A der Fig. 1 zeigt;
- Fig. 3: eine perspektivische Darstellung einer zweiten Ausführungsform eines Luftsackmoduls zeigt;
- Fig. 4: einen Querschnitt durch die Schnittebene A der Fig. 3 zeigt;
- Fig. 5: eine perspektivische Darstellung einer dritten Ausführungsform eines Luftsackmoduls zeigt; und
- Fig. 6: einen Querschnitt durch die Schnittebene A der Fig. 5 zeigt.

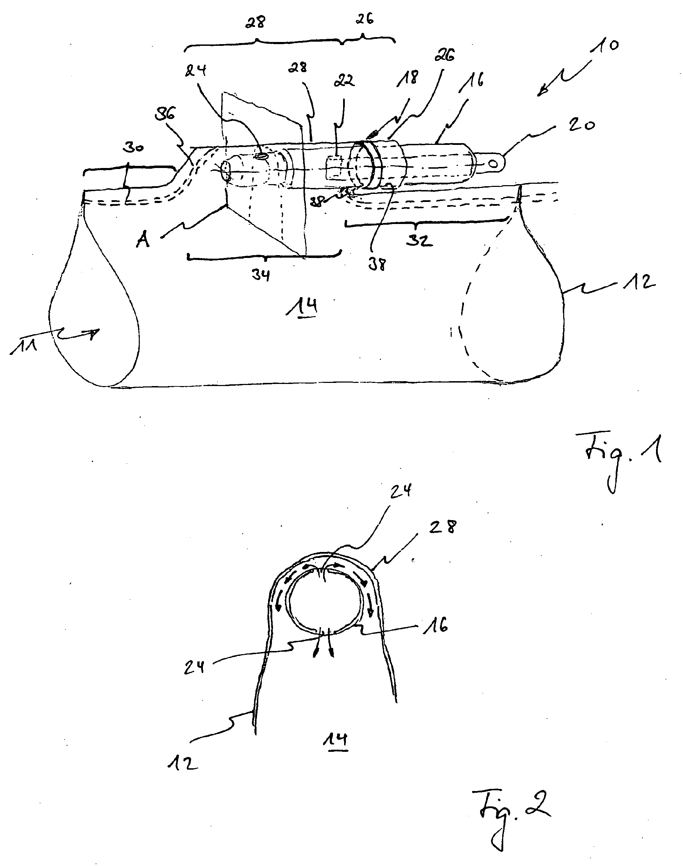

Im Folgenden wird zunächst unter gleichzeitiger Bezugnahme auf die Fig. 1 bis 6 der grundsätzliche Aufbau des erfindungsgemäi3en Luftsackmoduls 10 beschrieben, welcher in den drei in den Fig. 1 bis 6 gezeigten Ausführungsformen jeweils derselbe ist. Bei dem in den Fig. 1 bis 6 gezeigten Luftsackmodul 10 kann es sich beispielsweise um einen Seitenairbag und insbesondere um einen Fensterairbag für ein Kraftfahrzeug handeln. Das Luftsackmodul 10 besteht im Wesentlichen aus einem aufblasbaren Luftsack 11 und einem stabförmigen Gasgenerator 16 zum Aufblasen des Luftsacks 11. Sofern hier von einem Luftsack die Rede ist, so ist hierunter die Luftsackhülle 12 zu verstehen, welche im aufgeblasenen Zustand die Expansionskammer 14 des Luftsackmoduls umfangsseitig umgibt und dadurch definiert.

Wie den Fig. 1, 3 und 5 entnommen werden kann, wird der Luftsack 11 bzw. die Expansionskammer 14 durch eine Luftsackhülle 12 definiert, welche zusammengeklappt, und entlang zweier paarweise sich gegenüberliegender Randabschnitte an Nahtabschnitten 30 und 32 zusammengenäht wurde, so dass auf diese Weise im aufgeblasenen Zustand eine rohrförmige Expansionskammer 14 entsteht.

Wie den Figuren entnommen werden kann, gehen die beiden Nahtabschnitte 30 und 32 nicht ineinander über, sondern sind in einem Bereich 34 unterbrochen, wodurch eine Öffnung 34 definiert wird. An diese Öffnung 34 schließt sich ein Aufnahmeabschnitt 28 an, welcher nach unten in Richtung der Expansionskammer 14 geöffnet ist, um über die genannte Öffnung 34 in die Expansionskammer 14 zu münden.

Wie die Fig. 1, 3 und 5 ferner zeigen, geht der Aufnahmeabschnitt 28 kontinuierlich in einen schlauchförmigen Aufnahmestutzen 26 über. Anders ausgedrückt geht der schlauchförmige Aufnahmestutzen 26 über den Aufnahmeabschnitt 28 kontinuierlich in die Luftsackhülle 12 über und mündet somit in der Expansionskammer 14.

Der Aufnahmestutzen 26 ist in seiner lichten Öffnungsweite derart auf die Gestalt des stabförmigen Gasgenerators 16 abgestimmt, so dass dieser durch den Aufnahmestutzen 26 in den Aufnahmeabschnitt 28 eingeführt werden kann, so dass die Gasaustrittsöffnungen 24 des Gasgenerators 16 im Bereich des Aufnahmeabschnitts 28 zu liegen kommen.

Da der Aufnahmestutzen 26 aus einem flexiblen Hüllmaterial gefertigt ist, kann der Luftsack 11 über den Aufnahmestutzen 26 am Schaft des Gasgenerators 16 befestigt werden, indem beispielsweise der Aufnahmestutzen 26 auf den Schaft des Gasgenerators 16 aufgespannt wird. Dies kann beispielsweise mit einem den Aufnahmestutzen 26 umgebenden Spannmittel wie beispielsweise einer Rohrschelle 18 erfolgen, welche den Aufnahmestutzen 26 auf dem Schaft des Gasgenerators 16 aufklemmt bzw. aufspannt.

Da ein nicht unwesentlicher Teil des Gasgenerators 16 somit innerhalb des Aufnahmestutzens 26 sowie des Aufnahmeabschnitts 28 zu liegen kommt, steht dieser Teil nicht zu Befestigungszwecken am Kraftfahrzeug zur Verfügung, weshalb ein Bedürfnis danach besteht, andere Mittel vorzusehen, um das Luftsackmodul 10 am Kraftfahrzeug befestigen zu können.

Dementsprechend ist in den in den Fig. 1 und 3 und 5 dargestellten Ausführungsformen ein Befestigungselement 20 vorgesehen, welches mit dem Spannmittel 18 außenseitig auf den schlauchförmigen Aufnahmestutzen 26 aufgeklemmt ist. Bei den dargestellten Ausführungsformen handelt es sich bei dem Befestigungselement 20 um eine Art Befestigungsschiene, welche auf der rechten Seite mit einer Befestigungsöffnung versehen ist. Da der linke Abschnitt des Befestigungselements 20 dicht an dem Aufnahmestutzen 26 oder an dem Aufnahmeabschnitt 28 zu liegen kommt, ist dieser für eine Schraubmontage nur schwer zugänglich. Um das linke Ende des Befestigungselements 20 dennoch am Kraftfahrzeug befestigen zu können, ist dieses in den dargestellten Ausführungsformen mit einem Formschlussmittel wie beispielsweise einem Haken 22 versehen, so dass zur Montage des Befestigungselements 20 bzw. des gesamten Luftsackmoduls 10 zunächst der Haken 22 an einer geeigneten Stelle am Rahmen des Kraftfahrzeugs eingehakt wird, um anschließend das Befestigungselement 20 mit einer Schraube durch die Befestigungsöffnung am rechten Ende des Befestigungselements 20 am Kraftfahrzeug anschrauben zu können.

Wie am besten den Fig. 2, 4 und 6 entnommen werden kann, ist der Aufnahmeabschnitt 28 in seiner Gestalt im Wesentlichen komplementär auf die Gestalt des von ihm aufgenommenen Abschnitts des Gasgenerators 16 abgestimmt. Hierbei ist das von dem Aufnahmeabschnitt 28 gebildete Volumen nur unwesentlich größer als das des Gasgenerators 16, so dass das Volumen des Aufnahmeabschnitts 28 beim Aufblasen des Luftsacks 11 im Wesentlichen konstant bleibt. Auf diese Weise kann gewährleistet werden, dass der Anteil des aus dem Gasgenerator 16 ausströmenden Gases, welcher durch Gasaustrittsöffnungen 24 benachbart zur Wandung des Aufnahmeabschnitts 28 ausströmt, nicht unkontrolliert in die Expansionskammer 14 des Luftsacks 11 strömt. Vielmehr wird dieser Anteil des Gases im Zwischenraum zwischen dem Schaft des Gasgenerators 16 und dem Hüllmaterial des Aufnahmeabschnitts 28 kontrolliert in Richtung der Expansionskammer 14 des Luftsacks 11 geleitet, wie dies in den Fig. 2, 4, und 6 durch die Pfeile angedeutet ist.

Der in den voranstehenden Passagen der Figurenbeschreibung erläuterte Aufbau des erfindungsgemäßen Luftsackmoduls 10 ist für sämtliche in den Figuren dargestellte Ausführungsformen im Wesentlichen identisch. Im Folgenden werden nun individuelle Ausgestaltungen des Luftsackmoduls 10 unter Bezugnahme auf die einzelnen Figuren erläutert.

Bei dem in den Fig. 1 und 2 dargestellten Luftsackmodul 10 ist der Aufnahmeabschnitt 28 einschließlich des schlauchförmigen Aufnahmestutzens 26 einstückig aus demselben Hüllmaterial 12 gefertigt wie der eigentliche Luftsack 11. Zur Abgrenzung des Aufnahmeabschnitts 28 von der Expansionskammer 14 ist die Luftsackhülle in der bereits voran beschriebenen Art und Weise mit den Nahtabschnitten 30 und 32 versehen, welche durch die Öffnung 34 unterbrochen sind, von welcher der Aufnahmeabschnitt 28 abzweigt.

Wie aus der Zusammenschau der Fig. 1 und der Fig. 2 ersichtlich wird, weist das Hüllmaterial 12 eine schlauchförmige Gestalt auf, welcher durch die Abnäher 32 und 30 sowie einem von dem Nahtabschnitt 30 abzweigenden weiteren Nahtabschnitt 36 seine für die vorliegende Erfindung charakteristische Form verliehen wurde. Wie aus Fig. 1 erkannt werden kann, zweigt von dem Nahtabschnitt 32 ein Nahtabschnitt 38 ab, welcher die durch das Schnittmuster bedingten freien Randabschnitte des Auf nahmestutzens 26 miteinander verbindet, um so den Aufnahmestutzen 26 zu bilden.

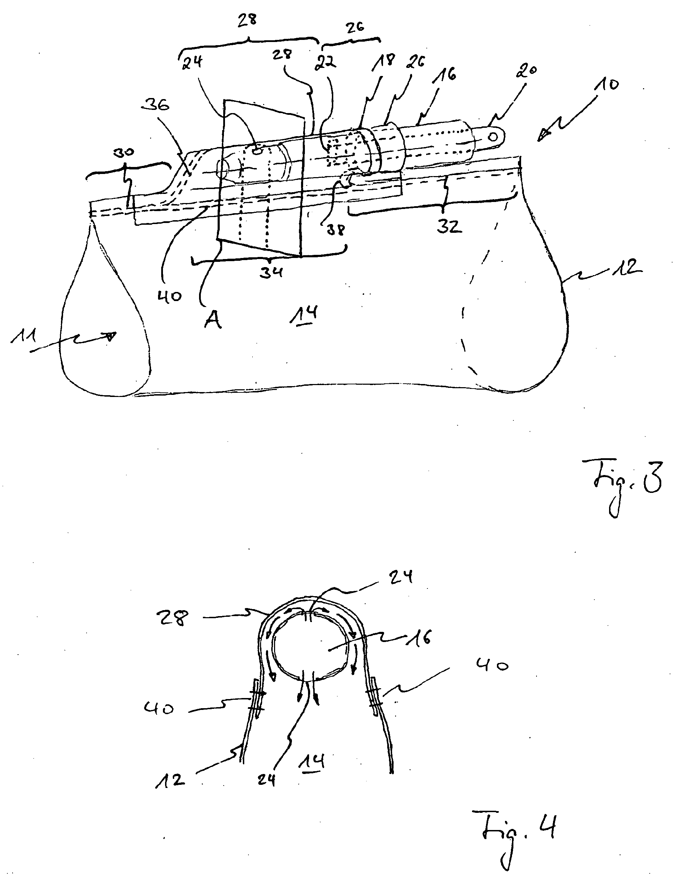

Da der Aufnahmeabschnitt 28 infolge des ausströmenden Gases hohen Kräften ausgesetzt ist, kann ein Bedarf danach bestehen, den Aufnahmeabschnitt 28 einschließlich des Aufnahmestutzens 26 besonders robust auszubilden. Dementsprechend ist bei der in den Fig. 3 und 4 dargestellten Ausführungsform des Luftsackmoduls 10 der Aufnahmeabschnitt 28 aus einem anderen Hüllmaterial gefertigt als die die Expansionskammer 14 bildende Luftsackhülle 12. Der Aufnahmeabschnitt 28 einschließlich des Aufnahmestutzens 26 besteht somit aus einem separaten Gewebekörper, welcher entlang zweier Doppelnähte 40 (Fig. 4) im Bereich der Unterbrechung 34 mit der Luftsackhülle 12 auf zwei sich gegenüberliegenden Seiten vernäht wurde. Die Nahtführung der Nähte 36 und 38 entspricht der voran beschriebenen Nahtführung, so dass diesbezüglich auf die Ausführungen zu der in den Fig. 1 und 2 gezeigten Ausführungsform verwiesen werden kann.

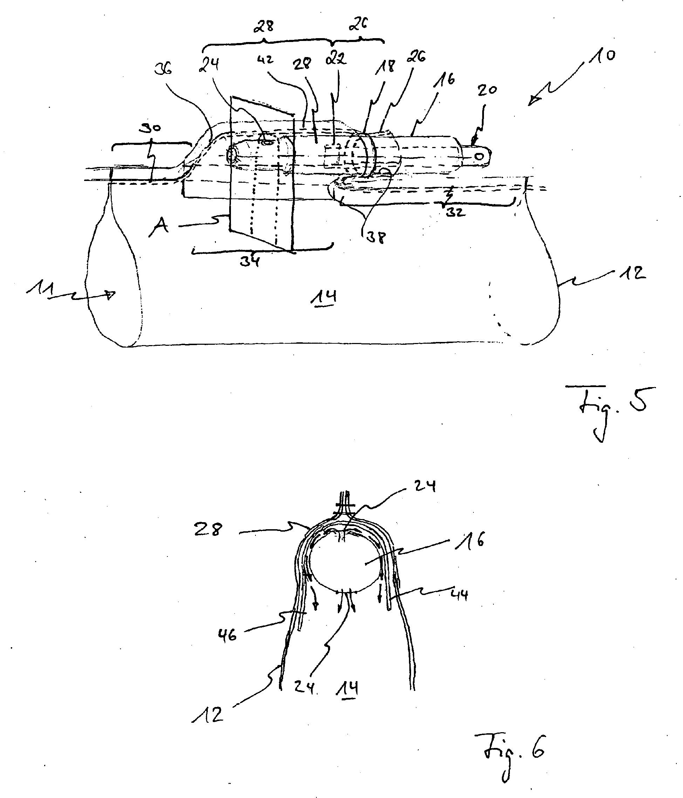

Eine weitere Ausführungsform eines erfindungsgemäßen Luftsackmoduls 10 ist in den Fig. 5 und 6 beschrieben, bei der im Unterschied zu der in der Fig. 1 dargestellten Ausführungsform die Luftsackhülle 12 im Ausgangszustand keinen schlauch- oder rohrförmigen Charakter aufweist, sondern als ebenes, einfach liegendes Gewebematerial vorliegt. Bei der in den Fig. 5 und 6 dargestellten Ausführungsform ist der Aufnahmeabschnitt 28 einschließlich des Aufnahmestutzens 26 wiederum einstückig aus demselben Hüllmaterial gefertigt wie der eigentliche Luftsack 11, wobei im Unterschied zu der in den Fig. 1 und 2 dargestellten Ausführungsform keine schlauch- bzw. rohrförmige Luftsackhülle 12, sondern ein ebenes, einfach liegendes Ausgangsmaterial zum Einsatz kommt. Die Formgebung der Expansionskammer 14 sowie des daran anschließenden Auf nahmeabschnitts 28 einschließlich des Aufnahmestutzens 26 erfolgt wiederum wie bei der in den Fig. 1 und 2 dargestellten Ausführungsform durch die Abnäher 32 und 30, wobei bedingt durch das ebene, einfach liegende Ausgangsmaterial der Aufnahmeabschnitt 28 und der Aufnahmestutzen 26 oberseitig mit einer weiteren Naht 42 zugenäht werden muss, um den Gasgenerator 16 gegenüber der Außenatmosphäre darin einzuschließen.

Diese als Doppelnaht ausgeführte Naht 42 ist in der Fig. 6 deutlicher erkennbar, welche zwei gegenüberliegende Randabschnitte des Hüllmaterials 12 zusammenhält. Damit infolge der Druckbeaufschlagung beim Ausströmen des Gases aus dem Gasgenerator 16 aus der oberen Gasaustrittsöffnung 24 die Naht 42 nicht aufreißt oder anderweitig beschädigt wird, ist der Aufnahmeabschnitt 28 zumindest im Bereich dieser Doppelnaht 42 mit einer zusätzlichen Materiallage 44 ausgekleidet, welche an dem Hüllmaterial 12 mittels einer weiteren Naht 46 angenäht ist, um somit die Doppelnaht 42 vor schädigenden Einflüssen zu schützen.

### Bezugszeichenliste

- 10: Luftsackmodul
- 11: Luftsack
- 12: Luftsackhülle
- 14: Expansionskammer
- 16: Gasgenerator
- 18: Spannmittel (Rohr-) Schelle
- 20: Befestigungselement
- 22: Haken von 20
- 24: Gasaustrittsöffnung
- 26: schlauchförmiger Aufnahmestutzen
- 28: Aufnahmeabschnitt
- 30: Nahtabschnitt
- 32: Nahtabschnitt
- 34: Unterbrechung zwischen 30 und 32 bzw. Öffnung zwischen 14 und 28
- 36: Nahtabschnitt
- 38: Nahtabschnitt
- 40: Doppelnaht
- 42: Doppelnaht
- 44: Materiallage
- 46: Naht

## Patentansprüche

1. Luftsackmodul (10) für ein Kraftfahrzeug mit einem eine Expansionskammer (14) aufweisenden, aufblasbaren Luftsack (11) und einem stabförmigen Gasgenerator (16) zum Aufblasen des Luftsacks (11), wobei die Hülle (12) des Luftsacks (11) in einen schlauchförmigen Aufnahmestutzen (26) übergeht, durch den der Gasgenerator (16) zumindest teilweise in den Luftsack (11) hineinragt, und wobei der Luftsack (11) einen von der Expansionskammer (14) definiert abgesetzten Aufnahmeabschnitt (28) zur Anbindung des Aufnahmestutzens (26) an die von der Luftsackhülle (12) definierte Expansionskammer (14) aufweist,
**dadurch gekennzeichnet, dass**
der Aufnahmeabschnitt (28) in seiner Gestalt komplementär auf die Gestalt des von ihm aufgenommenen Abschnitts des Gasgenerators (16) abgestimmt ist und der Gasgenerator (16) derart im Bereich des Aufnahmeabschnitts (28) angeordnet ist, dass ein Teil des ausströmenden Gases bedingt durch die komplementär Gestalt des Aufnahmeabschnitts (28) in die Expansionskammer (14) des Luftsacks (11) geleitet wird.

2. Luftsackmodul (10) nach Anspruch 1,
**dadurch gekennzeichnet, dass**
der Aufnahmestutzen (26) mit einem den Aufnahmestutzen (26) umgebenden Spannmittel (18) auf dem Gasgenerator (16) aufgeklemmt ist.

3. Luftsackmodul (10) nach Anspruch 2,
**dadurch gekennzeichnet, dass**
das Luftsackmodul (10) ferner ein Befestigungselement (20) aufweist, welches mit dem Spannmittel (18) außenseitig auf dem schlauchförmigen Aufnahmestutzen (26) aufgeklemmt ist.

4. Luftsackmodul (10) nach einem der Ansprüche 1 bis 3,
**dadurch gekennzeichnet, dass**
die die Expansionskammer (14) bildende Luftsackhülle (12) eine Naht (30, 32) aufweist, entlang derer zumindest zwei Randabschnitte der Luftsackhülle verbunden sind, wobei diese Naht (30, 32) eine Unterbrechung (34) aufweist, über welche der Aufnahmeabschnitt (28) in die Expansionskammer (14) mündet.

5. Luftsackmodul (10) nach einem der Ansprüche 1 bis 4,
**dadurch gekennzeichnet, dass**
der Aufnahmeabschnitt (28) in seiner Gestalt derart auf die Gestalt des von ihm aufgenommenen Abschnitts des Gasgenerators (16) abgestimmt ist, dass sein Volumen beim Aufblasen des Luftsacks (11) im Wesentlichen konstant bleibt.

6. Luftsackmodul (10) nach zumindest einem der Ansprüche 1, bis 5,
**dadurch gekennzeichnet, dass**
der Aufnahmeabschnitt (28) als separates Teil aus einem Hüllmaterial gefertigt ist.

7. Luftsackmodul (10) nach Anspruch 6,
**dadurch gekennzeichnet, dass**
der Aufnahmeabschnitt (28) einschließlich des Aufnahmestutzens (26) aus einem anderen Hüllmaterial als die die Expansionskammer (14) bildende Luftsackhülle (12) gefertigt ist.

8. Luftsackmodul (10) nach zumindest einem der Ansprüche 1 bis 7,
**dadurch gekennzeichnet, dass**
der Aufnahmeabschnitt (28) mitsamt dem schlauchförmigen Aufnahmestutzen (26) mit der die Expansionskammer (14) bildenden Luftsackhülle (12) verbunden ist.

9. Luftsackmodul (10) nach zumindest einem der voranstehenden Ansprüche,
**dadurch gekennzeichnet, dass**
der Luftsack (11) mittels eines zweidimensionalen Nähverfahrens gefertigt ist.

10. Luftsackmodul (10) nach zumindest einem der Ansprüche 1 bis 9,
**dadurch gekennzeichnet, dass**
der Aufnahmeabschnitt (28) bereichsweise mit zumindest einer zusätzlichen Materiallage (44) ausgekleidet ist.

## Claims

1. Air bag module (10) for a motor vehicle with an inflatable airbag (11) comprising an expansion chamber (14) and a bar-shaped inflator (16) for inflating the airbag (11), wherein the covering (12) of the airbag (11) merges into a tubular receiving connection (26), through which the inflator (16) projects at least partly into the airbag (11), and wherein the airbag (11) comprises a receiving section (28) defined separately from the expansion chamber (14) for connecting the receiving connection (26) with the expansion chamber (14) defined by the air bag covering (12),
**characterized in that**
the receiving section (28) is arranged in its shape complementary to the shape of the received section of the inflator (16) and the inflator (16) is arranged in the area of the receiving section (28) such that part of the emitted gas is directed into the expansion chamber (14) of the air bag (11) due to the complementary shape of the receiving section (28).

2. Air bag module (10) according to claim 1,
**characterized in that**
the receiving connection (26) is clamped onto the inflator (16) with a clamping means (18) surrounding the receiving connection (26).

3. Air bag module (10) according to claim 2,
**characterized in that**
the air bag module (10) further comprises a fastening element (20) clamped outside onto the tubular receiving connection (26) with the clamping means (18).

4. Air bag module (10) according to one of the claims 1 to 3,
**characterized in that**
the airbag covering (12) forming the expansion chamber (14) comprises a seam (30, 32) along which at least two edge sections of the air bag covering are connected, wherein said seam (30, 32) comprises a discontinuity (34) over which the receiving portion (28) leads into the expansion chamber (14).

5. Air bag module (10) according to one of the claims 4 or 5,
**characterized in that**
the receiving portion (28) is arranged in its shape to the shape of the received section of the inflator (16) such that its volume remains substantially constant when inflating the air bag (11).

6. Air bag module (10) according to at least one of the claims 1 to 5,
**characterized in that**
the receiving portion (28) is made as a separate part of a covering material.

7. Air bag module (10) according to claim 6,
**characterized in that**
the receiving portion (28) including the receiving connection (26) is made of another covering material than the air bag covering (12) forming the expansion chamber (14).

8. Air bag module (10) according to at least one of the claims 1 to 7,
**characterized in that**
the receiving portion (28) with the tubular receiving connection (26) is connected with the air bag covering (12) forming the expansion chamber (14).

9. Air bag module (10) according to at least one of the preceding claims,
**characterized in that**
the airbag (11) is made using a two-dimensional sewing procedure.

10. Air bag module (10) according to at least one of the claims 1 to 9,
**characterized in that**
the receiving portion (28) is lined in certain areas with at least one additional material layer (44).

## Revendications

1. Module de coussin à gaz (10) pour un véhicule automobile, comprenant un coussin à gaz gonflable (11) comportant une chambre à expansion (14) et un générateur de gaz (16) en forme de barreau pour gonfler le coussin à gaz (11), dans lequel l'enveloppe (12) du coussin à gaz (11) se transforme en une pipe de réception (26) en forme de tuyau, à travers laquelle le générateur de gaz (16) pénètre au moins partiellement dans le coussin à gaz (11) et dans lequel le coussin à gaz (11) comprend un tronçon de réception (28) déporté de manière définie par rapport à la chambre à expansion (14) pour la liaison de la pipe de réception (26) à la chambre à expansion (14) définie par l'enveloppe (12) du coussin à gaz,
**caractérisé en ce que**
le tronçon de réception (28) est accordé quant à sa configuration de manière complémentaire à la configuration du tronçon du générateur de gaz (16) qu'il reçoit, et le générateur de gaz (16) et agencé dans la zone du tronçon de réception (28) de telle manière qu'une partie des gaz qui s'échappent est amenée dans la chambre à expansion (14) du coussin à gaz (11) en raison de la configuration complémentaire du tronçon de réception (28).

2. Module de coussin à gaz (10) selon la revendication 1,
**caractérisé en ce que** la pipe de réception (26) est fixée par serrage sur le générateur de gaz (16) avec un organe de serrage (18) qui entoure la pipe de réception (26).

3. Module de coussin à gaz (10) selon la revendication 2,
**caractérisé en ce que** le module de coussin à gaz (10) comprend encore un élément de fixation (20) qui est fixé par serrage du côté extérieur sur la pipe de réception (26) en forme de tuyau au moyen de l'organe de serrage (18).

4. Module de coussin à gaz (10) selon l'une des revendications 1 à 3,
**caractérisé en ce que** l'enveloppe (12) du coussin gonflable qui forme la chambre à expansion comporte une couture (30, 32) le long de laquelle sont reliés au moins deux tronçons de bordure de l'enveloppe du coussin à gaz, ladite couture (30, 32) comportant une interruption (34) via laquelle le tronçon de réception (28) débouche dans la chambre à expansion (14).

5. Module de coussin à gaz (10) selon l'une des revendications 1 à 4,
**caractérisé en ce que** le tronçon de réception (28) est accordé quant à sa configuration à la configuration du tronçon du générateur de gaz (16) qu'il reçoit de telle manière que son volume reste sensiblement constant lors du gonflage du coussin à gaz (11).

6. Module de coussin à gaz (10) selon l'une au moins des revendications 1 à 5,
**caractérisé en ce que** le tronçon de réception (28) est fabriqué comme une pièce séparée à partir d'un matériau d'enveloppe.

7. Module de coussin à gaz (10) selon la revendication 6,
**caractérisé en ce que** le tronçon de réception (28), y compris la pipe de réception (26), est fabriqué à partir d'un autre matériau d'enveloppe que l'enveloppe (12) du coussin gonflable qui forme la chambre à expansion (14).

8. Module de coussin à gaz (10) selon l'une au moins des revendications 1 à 7,
**caractérisé en ce que** le tronçon de réception (28) ensemble avec la pipe de réception (26) en forme de tuyau est relié à l'enveloppe (12) du coussin à gaz qui forme la chambre à expansion (14).

9. Module de coussin à gaz (10) selon l'une au moins des revendications précédentes,
**caractérisé en ce que** le coussin à gaz (11) est fabriqué au moyen d'une procédure de couture bidimensionnelle.

10. Module de coussin à gaz (10) selon l'une au moins des revendications 1 à 9,
**caractérisé en ce que** le tronçon de réception (28) est habillé localement avec au moins une couche de matériau additionnelle (44).
